# EUROPÄISCHE PATENTANMELDUNG

(11) **EP 3 626 650 A1**
(43) Veröffentlichungstag der Anmeldung: **25.03.2020**
(21) Anmeldenummer: 18199284.3
(22) Anmeldetag: 09.10.2018
(51) Int. Cl.: B65D 79/02, B65D 55/02, G01N 27/30, G01K 3/04, G02F 1/155, B65D 5/74, B65D 47/06, B65D 47/08, B65D 51/18, B65D 51/24

(54) **VERSCHLUSSVORRICHTUNG MIT ELEKTROCHEMISCHEM SENSOR**

(30) Priorität: 24.09.2018 EP 18196294
(71) Anmelder: PolyTaksys GmbH, 54340 Longuich (DE)
(72) Erfinder: Renners, Philip, 48147 Münster (DE)
(74) Vertreter: Fabry, Bernd

(57) **Zusammenfassung**

Vorgeschlagen wird eine Verschlussvorrichtung für Verpackungen, speziell Konsumgüterverpackungen, wie beispielsweise Getränkekartons, die über einen elektrochemischen Sensor verfügt, der erst beim Öffnen durch die Produktfeuchte aktiviert wird und dann durch eine laterale Oxidation einer der Elektroden eine optische Anzeige liefert, mit deren Hilfe beispielsweise auf die Öffnungsdauer oder die verbliebene Haltbarkeit des Lebensmittels geschlossen werden kann.

## Beschreibung

### PRIORITÄTSANSPRUCH

Die vorliegende Patentanmeldung beansprucht die Priorität der jüngeren Europäischen Patentanmeldung

### 18 196 294.5

vom 24. September 2018.

### GEBIET DER ERFINDUNG

Die Erfindung befindet sich auf dem Gebiet Verpackungsindustrie und betrifft einen Verschluss für Verpackungen, beispielsweise aber nicht ausschließlich für Konsumgüter, wie Lebensmittel, Getränke aber auch Lacke und Farben, der mit einem elektrochemischen Sensor versehen ist.

### TECHNOLOGISCHER HINTERGRUND

Elektrochemische Prozessoren, die nach dem Prinzip einer lateralen Selbstoxidation von nanoskaligen Aluminium arbeiten, sind aus dem Stand der Technik bekannt und werden von der GLOBAL INNOVATIONS GERMANY GMBH & CO KG unter der geschützten Bezeichnung "Open Monitor" vertrieben.

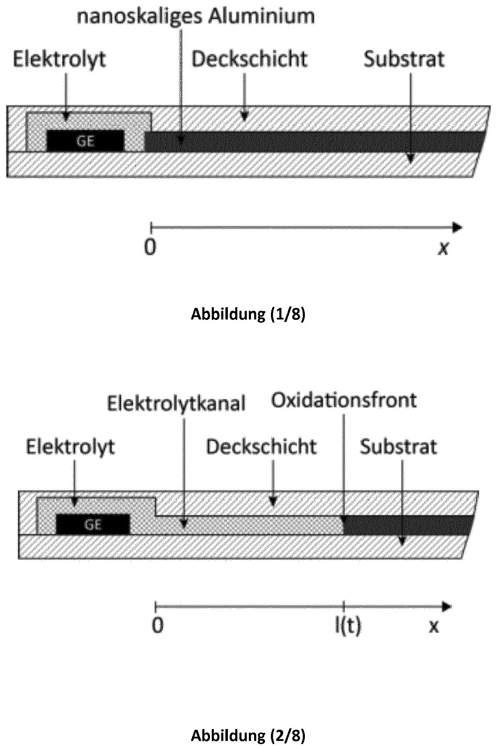

In den **Abbildungen 1 und 2** wird das Funktionsprinzip derartiger Sensoren verdeutlicht, die beispielsweise eine Länge von etwa 20 bis 30 mm und eine Breite von etwa 1 cm aufweisen. Eine mit einer Deckschicht verschlossene Aluminiumschicht mit einer Stärke von etwa 20 bis 30 nm wird auf einen flexiblen Träger ("Substrat"), beispielsweise eine Polyesterfolie aufgebracht und mit einer Gegenelektrode beispielsweise aus Graphit kurzgeschlossen. Wenn die beiden Folien nun durch einen Elektrolyten, vorzugsweise eine Kochsalzlösung, in Kontakt gebracht werden, wird durch die Potentialdifferenz zwischen dem Aluminium und der Gegenelektrode ein Oxidationsprozess in Gang gesetzt, der entlang einer Raumrichtung ("lateral") der longitudinalen Ausrichtung der Aluminiumelektrode folgend mit scharfer Front voranschreitet und durch die Bildung einer transparenten Oxidschicht optisch verfolgt werden kann.

Derartige Vorrichtungen weisen den Vorteil auf, dass sie keine Batterie benötigen, sondern selbstversorgend sind. Sie werden insbesondere vorgeschlagen, um damit die Öffnungsdauer von Konsumprodukten bzw. deren Verpackung, insbesondere aus dem Lebensmittelbereich zu verfolgen und optisch anzuzeigen.

### RELEVANTER STAND DER TECHNIK

Aus der US 5,912,759 (WISCONSIN LABEL) ist eine elektrochemische Anzeigevorrichtung bekannt, die zwei Elektrodenschichten enthält, welche durch eine dielektrische Schicht getrennt sind. Konzentrische Öffnungen sind in der dielektrischen Schicht ausgebildet, wobei eine der Elektrodenschichten einen bestimmten Abschnitt der anderen Elektrodenschicht freilegt. Eine Elektrolytschicht überlappt die andere und den oben bezeichneten Abschnitt. Wenn sie aktiviert, d.h. kurzgeschlossen wird, erfolgt ein Stromfluss durch die Öffnungen in dereinen Elektrodenschicht und der dielektrischen Schicht zu dem bestimmten Abschnitt der anderen Elektrodenschicht, was zu einer elektrochemische Reaktion führt, die den bezeichneten Abschnitt erodiert und eine darunter befindliche Schicht sichtbar macht.

Gegenstand der Schutzrechte EP 23783541 B1**,** EP 258178561 B1**,** WO 2009 056591 A1und WO 2011128039 A1(UNIV MÜNSTER) sind elektrochemische Sensoren der eingangs beschriebenen Art.

Weiter verwiesen wird auf die Veröffentlichungen von KNOLL ET AL. "Time dependent electrochemical switches based on nanofilm processors" sowie "Digital switching systems based on lateral self-oxidation of aluminum" in SENSORS AND ACTUATORS B 176, s. 186-189 (2013**)** sowie ELECTROCHEMICAL COMMUNICATION 29, S. 75-77 (2013**).**

### AUFGBE DER ERFINDUNG

Obschon also elektrochemische Sensoren grundsätzlich zur Verfügung stehen, die auch ausdrücklich für die Verwendung im Zusammenhang mit der Kennzeichnung von Lebensmitteln empfohlen werden, fehlt es doch bis heute an einer praktischen Umsetzung.

Die vordringliche Aufgabe der vorliegenden Erfindung hat daher darin bestanden, eine Vorrichtung unter Verwendung der oben genannten elektrochemischen Sensoren zur Verfügung zu stellen, mit deren Hilfe die Öffnungsdauer von Konsumprodukten, z.B. aus dem Lebensmittelbereich im Allgemeinen und von Getränkeverpackungen im Besonderen beurteilen und über die Zeit verfolgen kann.

### BESCHREIBUNG DER ERFINDUNG

Ein erster Gegenstand der Erfindung betrifft eine Verschlussvorrichtung für eine Verpackung, speziell eine Konsumgüter- und/oder Lebensmittelverpackung bestehend aus oder umfassend:
(i) einen Verschluss für eine Verpackung zur Aufnahme von Konsumgütern, speziell von Lebensmitteln, bestehend aus
   (i-a) einem Flansch mit einem mittig angeordneten Durchlass und einem darüber angeordneten erhabenen Außengewinde zur Aufnahme eines Drehverschlusses;
   (i-b) einen Verschluss, speziell einem Drehverschluss, dessen Innengewinde mit dem Außengewinde des Flansches korrespondiert;
   (i-c) einen im Innern des Verschlusses angeordneten Schneidring sowie
   (i-d) eine Schutzfolie mit der der Durchlass im Flansch verschlossen ist;
(ii) einen elektrochemischen Sensor umfassend oder bestehend aus
   (ii-a) einem Träger (100)
   (ii-b) einer ersten Elektrode (200) sowie einer zweiten Elektrode (300), die jeweils gegenüber angeordnete erste und zweite Oberflächen aufweisen, wobei die beiden Elektroden unterschiedliche elektrochemische Potentiale aufweisen und mit jeweils einer ihrer Oberflächen auf dem Träger aufgebracht sind, so dass sie physisch voneinander in einer x-Richtung, parallel zum Träger angeordnet sind,
   (ii-c) eine elektrolytgenerierende Schicht, welche unter Einwirkung von Feuchtigkeit eine Elektrolytlösung bildet (401), die zumindest einen Teil der ersten Oberfläche der ersten Elektrode (200) und einen Teil der zweiten Oberfläche der zweiten Elektrode in y-Richtung bedeckt, und die besagte erste Elektrode (200) mit der zweiten Elektrode (300) elektrisch verbindet, und
   (ii-d) Mittel zum Kurzschließen der ersten Elektrode (200) mit der zweiten Elektrode (300);
   wobei

(a) der Verschluss auf der Verpackung angeordnet ist;
(b) der Schneidring im Verschluss, speziell im Drehverschluss so angeordnet ist, dass er beim Drehen des Verschlusses die Schutzfolie aufschneidet; und
(b) der elektrochemische Sensor so zwischen Verschluss und Verpackung angeordnet ist, dass Feuchtigkeit, die nach dem Drehen des Verschlusses und dem Aufschneiden der Schutzfolie aufsteigt, in die bisher inaktive elektrolytgenerierende Schicht eintritt und die laterale Oxidation der zweiten Elektrode durch Bereitstellen eines flüssigen Elektrolyten in Gang setzt.

Ein zweiter Gegenstand der Erfindung betrifft eine analoge Ausgestaltung, nämlich eine alternative Verschlussvorrichtung für eine Verpackung, speziell eine Konsumgüter- und/oder Lebensmittelverpackung bestehend aus oder umfassend:
(i) einen Verschluss für eine Verpackung zur Aufnahme von Konsumgütern, speziell von Lebensmitteln, bestehend aus
   (i-a) einer Abdeckfolie; oder
   (i-b) einem Deckel mit Drehgewinde; oder
   (i-c) einem Deckel zum Ausklappen und/oder Abziehen; oder
   (i-d) einem herausziehbaren Turm mit Deckel zum Ausklappen; oder Kombinationen der Ausführungsformen (i-a) bis (i-d);
(ii) einen elektrochemischen Sensor umfassend oder bestehend aus
   (ii-a) einem Träger (100)
   (ii-b) einer ersten Elektrode (200) sowie einer zweiten Elektrode (300), die jeweils gegenüber angeordnete erste und zweite Oberflächen aufweisen, wobei die beiden Elektroden unterschiedliche elektrochemische Potentiale aufweisen und mit jeweils einer ihrer Oberflächen auf dem Träger aufgebracht sind, so dass sie physisch voneinander in einer x-Richtung, parallel zum Träger angeordnet sind,
   (ii-c) eine elektrolytgenerierende Schicht, welche unter Einwirkung von Feuchtigkeit eine Elektrolytlösung bildet (401), die zumindest einen Teil der ersten Oberfläche der ersten Elektrode (200) und einen Teil der zweiten Oberfläche der zweiten Elektrode in y-Richtung bedeckt, und die besagte erste Elektrode (200) mit der zweiten Elektrode (300) elektrisch verbindet, und
   (ii-d) Mittel zum Kurzschließen der ersten Elektrode (200) mit der zweiten Elektrode (300);
   wobei
   (a) der Verschluss auf der Verpackung angeordnet ist; und
   (b) der elektrochemische Sensor so zwischen Verschluss und Verpackung angeordnet ist, dass nach dem Öffnen des Verschlusses aufsteigende Feuchtigkeit in die bisher inaktive elektrolytgenerierende Schicht eintritt und die laterale Oxidation der zweiten Elektrode durch Bereitstellen eines flüssigen Elektrolyten in Gang setzt.

Ebenfalls beansprucht werden Verpackungen umfassend die oben beschriebenen Verschlussvorrichtungen.

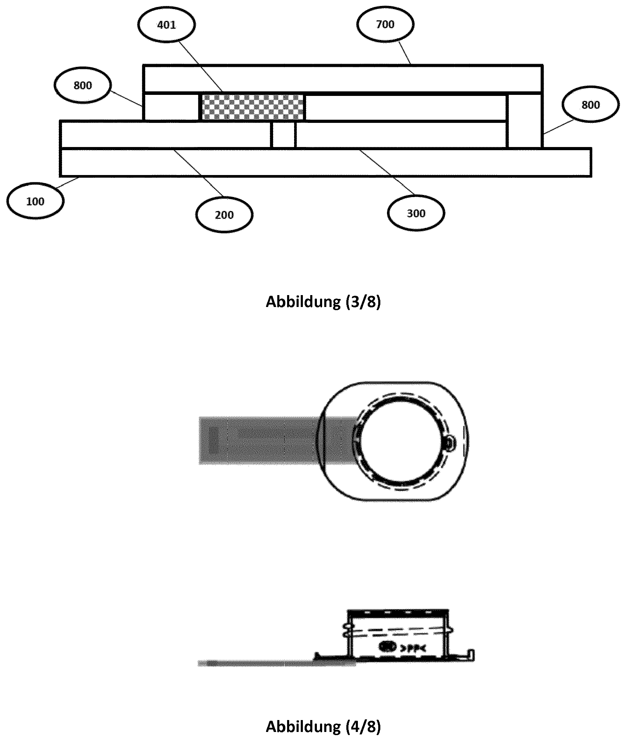

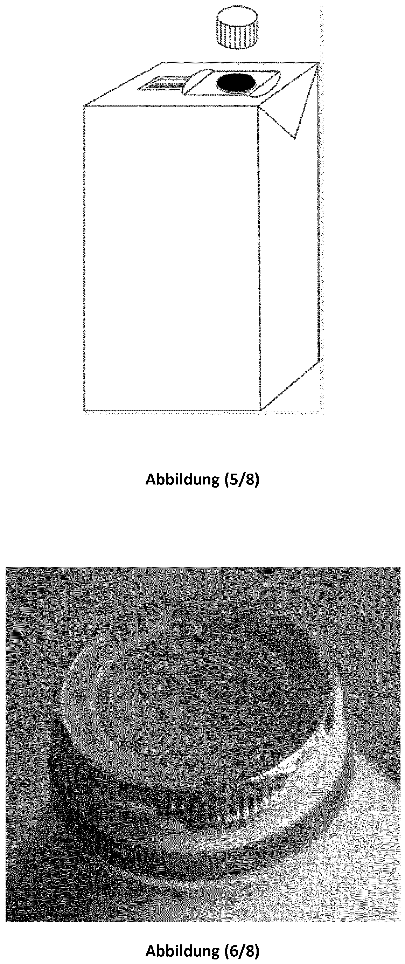

**Abbildung 4** zeigt einen Flansch mit Kavität in Richtung des laminar darunter angeordneten Sensors in der Aufsicht und in der Seitenansicht. **Abbildung 5** zeigt eine entsprechende Verpackung mit der ersten erfindungsgemäßen Verschlussvorrichtung.

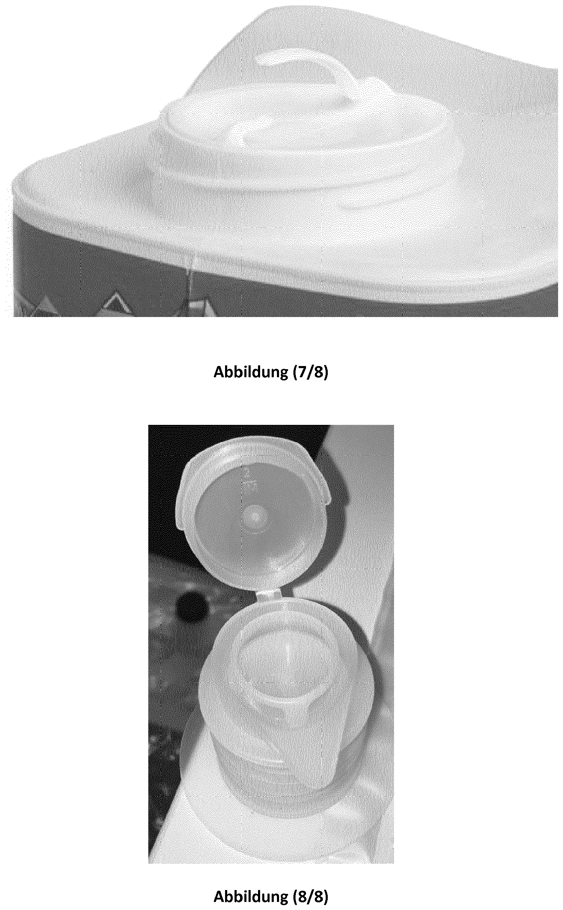

Die Abbildungen 6, 7 und 8 zeigen Ausführungsformen gemäß der alternativen Verschlussvorrichtung, nämlich zu einen eine Verpackung, bei der Verschluss aus einer Aluminiumfolie besteht, die um eine erhabene Öffnung umprägt worden ist **(****Abbildung 6****),** eine Verpackung mit einem Plastikdeckel, der mit Hilfe eines Flansches oder Rings angehoben und umgeklappt werden kann **(****Abbildung 7****)** sowie ein aus der Verpackung herausziehbarer Turm mit Ausgießer, der ebenfalls mit einem Klappdeckel versehen ist **(****Abbildung 8****).**

Überraschenderweise wurde gefunden, dass die bei der Öffnung der Verpackung, speziell bei Getränkekartons, aufsteigende Feuchtigkeit ausreichend ist, um damit den zuvor noch trockenen Elektrolytkanal zu benetzen und dadurch den Oxidationsprozess in Gang zu setzen. In der Praxis wurde ermittelt, dass hierzu schon ein Feuchtigkeitsgehalt von 30 bis 80 % ausreichend ist, welche durch die elektrolytgenerierende Schicht eingestellt werden kann. Diese Feststellung ist wichtig, denn sie bedeutet, dass geringe Mengen Feuchtigkeit, die möglicherweise aus dem Abfüllprozess stammen, die Reaktion gerade nicht starten.

### KURZE BESCHREIBUNG DER ERSTEN ERFINDUNGGEMÄSSEN VORRICHTUNG

Die Erfindung betrifft insbesondere den klassische Fall, gemäß dem die Verpackung mit einem Flansch versehen wird, bei dem es sich um einen so genannten "Overcoated Hole Verschluss" handelt, wie sie standardmäßig im Bereich der Getränke- und Milchindustrie eingesetzt werden. Darunter ist ein Verschluss zu verstehen, der als Basis ein Kunststoffplatte aufweist, die über einen Durchlass, in der Regel ein kreisrundes Loch, verfügt, welches durch eine Schutzfolie (beispielsweise aus Aluminium) gegen den Durchtritt des Füllguts, vorzugsweise einer Flüssigkeit wie Milch oder Fruchtsaft, geschützt ist. Diese Platte verfügt weiterhin über ein erhaben angeordnetes Außengewinde, welches dazu dient, dass man einen Drehverschluss aufbringen kann, dessen Innengewinde aus naheliegenden Gründen mit dem Außengewinde korrespondiert. In diesem Drehverschluss ist zudem ein Schneidring angeordnet und zwar dergestalt, dass beim Betätigen des Verschlusses der Schneidring mitbewegt wird, durch die Schutzfolie schneidet und sie öffnet, so dass das Füllgut entnommen bzw. ausgegossen werden kann. Der Flansch kann dabei eine so genannte Kavität aufweisen, was nichts anderes bedeutet, als dass das Außengewinde nicht zentriert auf der Kunststoffplatte angeordnet ist, sondern diese eine Verlängerung in eine Richtung ("Nase") besitzt. Diese Kavität ist vorzugsweise in Richtung des Sensors ausgeprägt, da auf diese Weise der Flüssigkeitstransport erleichtert wird.

Der Flansch wird im Produktionsmaßstab mit Hilfe eines Klebers, insbesondere eines Schmelzklebers über der Durchtrittsöffnung in der Verpackung aufgebracht. Gleichzeitig wird auch der Sensor aufgespendet und dabei so zwischen Verpackung und Flansch positioniert, dass die beim Öffnen der Verpackung aufsteigende Feuchtigkeit leicht herandiffundieren, das bislang leere Elektrolytreservoir füllen und so die Oxidation starten kann.

Mit dem Start der Oxidation wird das Aluminium in Aluminiumoxid umgewandelt, was daran kenntlich wird dass sich die metallische Folie transparent wird und zwar in der Weise, dass sich eine scharfe Front bildet, die mit der Zeit voranschreitet. Der Geschwindigkeit, mit der die Oxidation sichtlich vorangeht, kann nun beispielsweise eine Zeitskala zugeordnet werden. Dadurch ist es möglich einen Zusammenhang zwischen der fortgeschrittenen Oxidation und deren Start, nämlich dem Öffnen der Verpackung herzustellen.

Diese Ausgestaltung hat einen weiteren Vorteil: Die Oxidationsreaktion ist von den Bedingungen abhängig unter denen die Verpackung nach dem Öffnen gelagert wird. Weicht die Lagertemperatur nach oben ab, weil der Verbraucher vergessen hat, das Produkt in den Kühlschrank zurückzustellen, läuft die Oxidation in dieser Zeit schneller. Da aber höhere Temperaturen auch die Haltbarkeit negativ beeinflussen, spiegelt die schnellere Oxidation auch gleichzeitig ohne weiteres Dazutun die schneller abnehmende Haltbarkeit und Qualität des Lebensmittels wieder.

### KURZE BESCHREIBUNG DER ALTERNATIVEN ERFINDUNGGEMÄSSEN VORRICHTUNG

Bei den alternativen Ausführungsformen handelt es sich um Standardverschlüsse speziell für flüssige Güter, beispielsweise Milch, aber auch technische Flüssigkeiten, die im gleichen erfindungsgemäßen Sinne mit den elektrochemischen Sensoren ausgerüstet werden und nah dem gleichen Prinzip funktionieren.

Im einfachsten Fall handelt es sich um eine auf der Oberseite der Verpackung angeordneten Ausguss, der mit einer Folie, beispielsweise aus Kunststoff oder Metall, speziell Aluminium, luftdicht verschlossen ("umprägt") wird.

Ganz ähnlich funktioniert der zweite Verschluss, bei dem der Ausguss mit einer Kappe - üblicherweise aus dem gleichen Kunststoff wie das Gebinde, versehen ist, welche entweder aufgedreht oder hochgeklappt werden kann. Gegebenenfalls befindet sich unter dieser Kappe noch eine Verschlussfolie aus Kunststoff oder Metall, die mechanisch geöffnet werden muss, beispielsweise mit Hilfe einer hochstehenden Lasche.

Schließlich kommt auch eine spezielle weitere Verschlussvorrichtung in Betracht, bei dem es sich um einen ausziehbaren Turm aus einem Kunststoffmaterial handelt, der ebenfalls wieder mit einer aufklappbaren Kappe versehen ist. Die Wandung des Turms ist einfaltbar, d.h. durch mechanischen Druck von oben lässt sich der Turm zusammenschieben und im Gebinde versenken, durch eine Zugbewegung, insbesondere mit Hilfe einer an der Kappe angebrachten Lasche, lässt er sich wieder aus dem Gebinde hervorholen.

### ELEKTROCHEMISCHE SENSOREN

Elektrochemische Sensoren, wie im Sinne der vorliegenden Erfindung zum Einsatz kommen, sind aus dem Stand der Technik hinlänglich bekannt. Durch Bezugnahme in die Offenbarung der vorliegenden Patentanmeldung eingeschlossen - soweit es die Herstellung der Sensoren angeht - sind die eingangs genannten Druckschriften der Universität Münster, so dass sich eine Wiederholung aller dort genannten speziellen Ausführungen erübrigt.

### AUFBAU DER SENSOREN

Grundsätzlich gilt jedoch, dass zumindest ein Teil der ersten Oberfläche der zweiten Elektrode (300), der nicht von dem Elektrolyten (401) bedeckt ist, in der y-Richtung mit einem elektrisch isolierenden Material, das den Elektrolyten (401) begrenzt, bedeckt ist und dadurch, dass diese ein Kurzschließen der ersten und der zweiten Elektrode eine Aktivierung des elektrochemischen Prozessors (1) initiiert, was eine laterale Delamination der zweiten Elektrode (300) und des isolierenden Materials (500) beginnend an der Kontaktstelle der zweiten Elektrode (300) und des isolierenden Materials (500) ermöglicht, wodurch ein Kanal zwischen der zweiten Elektrode (300) und dem isolierenden Material (500) ausgebildet wird.

Vorzugsweise existiert eine wasserdampfresistente Schutzschicht (700), die parallel zum Substrat (100) ausgebildet ist, wobei die erste Elektrode (200), die zweite Elektrode (300), der Elektrolyt (401) sowie das isolierende Material (500) zwischen dem Substrat (100) und der Verkapselungsschicht (700) in der y-Richtung eingeschlossen sind.

### ELEKTRODEN

Die erste Oberfläche der zweiten Elektrode (300) kann
(a) zumindest teilweise mit einer Deckschicht bedeckt, oder
(b) die Deckelemente in der ersten Oberfläche der besagten Elektroden eingebettet sein.

Die erste Elektrode (200) und die zweite Elektrode (300) können als Schicht mit einer bevorzugten Schichtdicke zwischen 10 und 100.000 nm, weiter bevorzugt zwischen 20 und 1.000 nm, insbesondere zwischen 300 und 500 nm, ausgebildet sein.

Die erste Elektrode (200) ist dabei vorzugsweise elektrisch mit der zweiten Elektrode (300), falls vorhanden, der dritten Elektrode (1200), über einen externen leitfähigen Pfad, der einen Schalter zum Schließen des elektrischen Stromkreises beinhaltet, elektrisch verbunden.

Die erste Elektrode (200) besteht vorzugsweise aus einem Material, das ausgewählt ist aus der Gruppe bestehend aus graphitischem Ruß (graphite carbon black), einem Zweikomponentenmaterial umfassend Graphit und ein (Meth)acrylatharz; elektrisch leitfähigen Polymeren, bevorzugt Poly(3,4-ethylendioxy)thiophen (PEDOT), Poly(3,4-ethylendioxythiophen)-poly(styrolsulfonat) (PEDOT:PSS), Polyanilin, dotiertes Polyanilin (PANI); und/oder Metallen. Vorzugsweise handelt es sich um eine Graphitelektrode.

Die zweite Elektrode (300) besteht hingegen aus einem Material, das ausgewählt ist aus der Gruppe bestehend aus Metallen, wie zum Beispiel Aluminium, Tantal oder elektrisch leitfähigen Polymeren, bevorzugt Poly(3,4-ethylendioxy)thiophen (PEDOT), Poly(3,4-ethylen-dioxythiophen)-poly(styrolsulfonat) (PEDOT:PSS), Polyanilin, dotiertes Polyanilin (PANI). Vorzugsweise handelt es sich um eine Aluminiumfolie mit einer Stärke von etwa 10 bis etwa 50 nm und insbesondere etwa 15 bis etwa 20 nm.

### ELEKTROLYTE

Bei dem ersten Elektrolyten (401) handelt es sich vorzugsweise um anorganische Salze, bevorzugt NaCl, CaCl₂, LiClO₄, und/oder Säuren, bevorzugt schwache Säuren, wobei der Elektrolyt (401) bevorzugt eine Lösung oder ein Gel oder ein druckbarer Lack aus besagten anorganischen Salzen und/oder besagten Säuren ist, wobei die Lösung oder das Gel oder der Lack Additive beinhalten können, wie beispielsweise Alkylenglykole, zum Beispiel Ethylenglykol, oder Mischungen aus Wasser-Ethylenglykol, und/oder Verdickungsmittel wie zum Beispiel Polyvinylalkohole und/oder Polysaccharide, wie zum Beispiel Zellulose und/oder Stärke, wasserfreie Elektrolyte auf Basis von N,N-Dimethylformamid, N,N-Dimethylacetamid und/oder gamma-Butyrolacton. Vorzugsweise kommt Kochsalzlösung zum Einsatz.

### SUBSTRAT UND SCHUTZSCHICHT

Das Substrat (100) umfasst ein Material ausgewählt aus der Gruppe bestehend aus einem Plastikmaterial, bevorzugt Polyethylen, Polypropylen, cöxtrudiertes Polyethylen, coextrudiertes Polyprophylen, Polyethylenterephtalat, Polyethylennaphtalindicarboxylat, Polycarbonat und/oder Polyamid; Papier, beschichtetes Papier, Glas und/oder einem keramischen Material,

Die Schutz- oder Verkapselungsschicht (700) besteht vorzugsweise aus einem Material ausgewählt aus der Gruppe bestehend aus einem Plastikmaterial, bevorzugt einem Polyethylen, Polyester, einem Lack auf Basis eines (Meth)acrylatharzes, (Meth)acrylatcopolymeren und/oder Polyurethanen, wobei besagtes Material bevorzugt transparent ist,

### GEWERBLICHE ANWENDBARKEIT

Eine weitere Ausgestaltung der vorliegenden Erfindung betrifft ein Verfahren zur Bestimmung der Öffnungsdauer bzw. Haltbarkeit von Konsumprodukten oder weiteren Produkten wie. z.B. Lacken bzw. deren Verpackungen, speziell von verpackten Lebensmitteln, umfassend oder bestehend aus den folgenden Schritten:
(a) Bereitstellen einer Verpackung zur Aufnahme von Gütern, speziell von Konsumgütern und/oder Lebensmitteln wie vorstehend erläutert, umfassend die erfindungsgemäßen Verschlussvorrichtungen;
(b) Befüllen der Verpackung mit dem Gut,
(c) Öffnen der Verpackung durch Betätigung des Drehverschlusses;
(d) Inkontaktbringen des Sensors mit der nach dem Öffnen der Verpackung aufsteigenden Feuchtigkeit, die in die bisher inaktive elektrolytgenerierende Schicht eintritt und die laterale Oxidation der zweiten Elektrode durch Bereitstellen eines flüssigen Elektrolyten in Gang setzt;
(e) Verfolgung des sich lateral ausbreitenden Oxidationsprozesses; und
(f) Zuordnung des Fortschritts des Oxidationsprozesses zu einem Zeitverlauf und/oder einem Haltbarkeitsdatum.

Der guten Ordnung halber sei darauf hingewiesen, dass die im Zusammenhang mit den Verschlussvorrichtungen und Verpackungen genannten bevorzugten Ausführungsformen mutatis-mutandis für das beanspruchte Verfahren mitgelten; eine Wiederholung ist daher nicht erforderlich.

### BEZUGSZEICHENLISTE

(100) Träger (Substrat)
(200) Erste Elektrode
(300) Zweite Elektrode
(401) Elektrolyt
(700) Schutzschicht
(800) Abstandshalter

## Patentansprüche

1. Verschlussvorrichtung für eine Verpackung, speziell eine Konsumgüter- und/oder Lebensmittelverpackung bestehend aus oder umfassend:
(i) einen Verschluss für eine Verpackung zur Aufnahme von Konsumgütern, speziell von Lebensmitteln, bestehend aus
(i-a) einem Flansch mit einem mittig angeordneten Durchlass und einem darüber angeordneten erhabenen Außengewinde zur Aufnahme eines Drehverschlusses;
(i-b) einen Verschluss, speziell einem Drehverschluss, dessen Innengewinde mit dem Außengewinde des Flansches korrespondiert;
(i-c) einen im Innern des Verschlusses angeordneten Schneidring sowie
(i-d) eine Schutzfolie mit der der Durchlass im Flansch verschlossen ist;
(ii) einen elektrochemischen Sensor umfassend oder bestehend aus
(ii-a) einem Träger (100)
(ii-b) einer ersten Elektrode (200) sowie einer zweiten Elektrode (300), die jeweils gegenüber angeordnete erste und zweite Oberflächen aufweisen, wobei die beiden Elektroden unterschiedliche elektrochemische Potentiale aufweisen und mit jeweils einer ihrer Oberflächen auf dem Träger aufgebracht sind, so dass sie physisch voneinander in einer x-Richtung, parallel zum Träger angeordnet sind,
(ii-c) eine elektrolytgenerierende Schicht, welche unter Einwirkung von Feuchtigkeit eine Elektrolytlösung bildet (401), die zumindest einen Teil der ersten Oberfläche der ersten Elektrode (200) und einen Teil der zweiten Oberfläche der zweiten Elektrode in y-Richtung bedeckt, und die besagte erste Elektrode (200) mit der zweiten Elektrode (300) elektrisch verbindet, und
(ii-d) Mittel zum Kurzschließen der ersten Elektrode (200) mit der zweiten Elektrode (300);
wobei
(a) der Verschluss auf der Verpackung angeordnet ist;
(b) der Schneidring im Verschluss, speziell im Drehverschluss so angeordnet ist, dass er beim Drehen des Verschlusses die Schutzfolie aufschneidet; und
(b) der elektrochemische Sensor so zwischen Verschluss und Verpackung angeordnet ist, dass Feuchtigkeit, die nach dem Drehen des Verschlusses und dem Aufschneiden der Schutzfolie aufsteigt, in die bisher inaktive elektrolytgenerierende Schicht eintritt und die laterale Oxidation der zweiten Elektrode durch Bereitstellen eines flüssigen Elektrolyten in Gang setzt.

2. Verschlussvorrichtung für eine Verpackung, speziell eine Konsumgüter- und/oder Lebensmittelverpackung bestehend aus oder umfassend:
(i) einen Verschluss für eine Verpackung zur Aufnahme von Konsumgütern, speziell von Lebensmitteln, bestehend aus
(i-a) einer Abdeckfolie; oder
(i-b) einem Deckel mit Drehgewinde; oder
(i-c) einem Deckel zum Ausklappen und/oder Abziehen; oder
(i-d) einem herausziehbaren Turm mit Deckel zum Ausklappen; oder Kombinationen der Ausführungsformen (i-a) bis (i-d);
(ii) einen elektrochemischen Sensor umfassend oder bestehend aus
(ii-a) einem Träger (100)
(ii-b) einer ersten Elektrode (200) sowie einer zweiten Elektrode (300), die jeweils gegenüber angeordnete erste und zweite Oberflächen aufweisen, wobei die beiden Elektroden unterschiedliche elektrochemische Potentiale aufweisen und mit jeweils einer ihrer Oberflächen auf dem Träger aufgebracht sind, so dass sie physisch voneinander in einer x-Richtung, parallel zum Träger angeordnet sind,
(ii-c) eine elektrolytgenerierende Schicht, welche unter Einwirkung von Feuchtigkeit eine Elektrolytlösung bildet (401), die zumindest einen Teil der ersten Oberfläche der ersten Elektrode (200) und einen Teil der zweiten Oberfläche der zweiten Elektrode in y-Richtung bedeckt, und die besagte erste Elektrode (200) mit der zweiten Elektrode (300) elektrisch verbindet, und
(ii-d) Mittel zum Kurzschließen der ersten Elektrode (200) mit der zweiten Elektrode (300);
wobei
(a) der Verschluss auf der Verpackung angeordnet ist;
(b) der elektrochemische Sensor so zwischen Verschluss und Verpackung angeordnet ist, dass nach dem Öffnen des Verschlusses aufsteigende Feuchtigkeit in die bisher inaktive elektrolytgenerierende Schicht eintritt und die laterale Oxidation der zweiten Elektrode durch Bereitstellen eines flüssigen Elektrolyten in Gang setzt.

3. Verpackung umfassend die Verschlussvorrichtung nach Anspruch 1 oder 2.

4. Verpackung nach Anspruch 3, **dadurch gekennzeichnet, dass** sie einen Getränkekarton darstellt.

5. Vorrichtung oder Verpackung nach mindestens einem der Ansprüche 1 oder 3, **dadurch gekennzeichnet, dass** der Flansch eine Kavität in Richtung des darunter angeordneten Sensors aufweist.

6. Vorrichtung oder Verpackung nach mindestens einem der Ansprüche 1 bis 5, **dadurch gekennzeichnet, dass** die erste Elektrode eine Graphitelektrode darstellt

7. Vorrichtung oder Verpackung nach mindestens einem der Ansprüche 1 bis 6, **dadurch gekennzeichnet, dass** die zweite Elektrode eine Aluminiumfolie darstellt.

8. Vorrichtung oder Verpackung nach Anspruch 7, **dadurch gekennzeichnet, dass** die Aluminiumfolie eine Stärke von etwa 10 bis etwa 50 nm aufweist.

9. Vorrichtung oder Verpackung nach mindestens einem der Ansprüche 1 bis 8, **dadurch gekennzeichnet, dass** der Elektrolyt eine Kochsalzlösung darstellt.

10. Vorrichtung oder Verpackung nach mindestens einem der Ansprüche 1 bis 9, **dadurch gekennzeichnet, dass** die zweite Elektrode auf der Sichtseite mit einer transparenten Wasserdampfbarriere beschichtet ist.

11. Verfahren zur Bestimmung der Öffnungsdauer bzw. Haltbarkeit von Konsumprodukten bzw. deren Verpackungen, speziell von verpackten Lebensmitteln, umfassend oder bestehend aus den folgenden Schritten:
(a) Bereitstellen einer Verpackung zur Aufnahme von Konsumprodukten, speziell von Lebensmitteln wie vorstehend erläutert umfassend die erfindungsgemäßen Verschlussvorrichtungen;
(b) Befüllen der Verpackung mit dem Gut;
(c) Öffnen der Verpackung durch Betätigung des Verschlusses;
(d) Inkontaktbringen des Sensors mit der nach dem Öffnen der Verpackung aufsteigenden Feuchtigkeit, die in die bisher inaktive elektrolytgenerierende Schicht eintritt und die laterale Oxidation der zweiten Elektrode durch Bereitstellen eines flüssigen Elektrolyten in Gang setzt;
(e) Verfolgung des sich lateral ausbreitenden Oxidationsprozesses; und
(f) Zuordnung des Fortschritts des Oxidationsprozesses zu einem Zeitverlauf und/oder einem Haltbarkeitsdatum.
